# EUROPÄISCHE PATENTSCHRIFT

(11) **EP 0 511 210 B1**
(45) Veröffentlichungstag und Bekanntmachung des Hinweises auf die Patenterteilung: **08.02.1995**
(21) Anmeldenummer: 90915445.2
(22) Anmeldetag: 25.10.1990
(51) Int. Cl.: H02K 7/08, H02K 7/16, H02K 19/38

(54) **ELEKTRISCHE MASCHINE MIT REGELBARER DREHZAHL**
VARIABLE-SPEED ELECTRIC MACHINE
MOTEUR ELECTRIQUE A VITESSE REGLABLE

(30) Priorität: 18.01.1990 DE 4001656
(43) Veröffentlichungstag der Anmeldung: 04.11.1992
(73) Patentinhaber: SIEMENS AKTIENGESELLSCHAFT, 80333 München (DE)
(72) Erfinder: UTECHT, Manfred, D-1000 Berlin 33 (DE)
(86) Internationale Anmeldenummer: EP9001801
(87) Internationale Veröffentlichungsnummer: WO9111050

(56) Entgegenhaltungen:
- CH-A- 0 218 706
- DE-C- 0 737 850
- DE-C- 3 840 587
- US-A- 3 473 475

## Beschreibung

Die Erfindung bezieht sich auf eine elektrische Maschine, deren Betriebsdrehzahl in einem Drehzahlregelbereich oberhalb der ersten biegekritischen Drehzahl regelbar ist, und deren Rotorkörper auf einer Welle angeordnet ist, die auf je einer Seite des Rotorkörpers in einem ersten und einem zweiten Lager elastisch gelagert ist.

In der Deutschen Offenlegungsschrift 24 40 549 ist eine elektrische Maschine beschrieben, deren Resonanzdrehzahlen durch eine zweckmäßige Wahl der Feder- und Dämpfungscharakte ristik der Federelemente an den Abstützstellen in einen günstigen Drehzahlbereich, z. B. zwischen Nenn- und Reglerdrehzahl, oder auch unter die Nenndrehzahl der Maschine gelegt werden können. Der mögliche Regelbereich der Drehzahl ist davon abhängig, wie groß der Bereich zwischen den beiden Resonanzdrehzahlen der Maschine ist, zwischen denen die Betriebsdrehzahl liegt. Bei überkritischem Betrieb einer elektrischen Maschine liegt die Betriebsdrehzahl üblicherweise zwischen der ersten kritischen Drehzahl und der zweiten kritischen Drehzahl der Maschine.

Der Erfindung liegt die Aufgabe zugrunde, den möglichen Drehzahlregelbereich einer überkritisch betriebenen elektrischen Maschine möglichst groß zu gestalten.

Die Aufgabe wird erfindungsgemäß dadurch gelöst, daß die Welle wenigstens in einem Teilbereich zwischen dem Rotorkörper und dem zweiten Lager wesentlich biegesteifer ausgeführt ist als in dem Bereich zwischen dem Rotorkörper und dem ersten Lager.

Die Versteifung der Welle zwischen dem Rotorkörper und dem zweiten Lager bewirkt, daß die erste und die zweite kritische Drehzahl jeweils zu höheren Drehzahlen hin verschoben werden. Die zweite kritische Drehzahl wird dabei um einen größeren Betrag verschoben als die erste kritische Drehzahl. Dadurch ergibt sich, daß die Differenz zwischen der ersten und der zweiten kritischen Drehzahl und damit der mögliche Drehzahlregelbreich größer wird.

Für den Fall, daß bei der elektrischen Maschine eine Erregermaschine mit einem Erregerrotor an ein Ende der Welle angekoppelt ist, kann die Erfindung dadurch vorteilhaft ausgestaltet werden, daß die Welle wenigstens in einem Teilbereich des Bereiches zwischen dem Rotorkörper und dem Erregerrotor wesentlich biegesteifer ausgeführt ist als in dem Bereich zwischen dem Rotorkörper und dem Erregerrotor abgewandten Lager der Welle.

In dem Fall, daß an der Welle der elektrischen Maschine ein Erregerrotor angekoppelt ist und daß die Welle an ihrem freien Ende und zwischen dem Rotorkörper und dem Erregerrotor sowie am freien Ende des Erregerrotors gelagert ist, ist die erste biegekritische Drehzahl normalerweise im wesentlichen durch den Teil der Welle bestimmt, der den Bereich des Rotorkörpers mit den zwei ihm benachbarten Lagern umfaßt. Die zweite biegekritische Drehzahl ergibt sich normalerweise im wesentlichen aus der ersten biegekritischen Drehzahl des Erregerrotors mit den beiden ihm benachbarten Lagern. Um die zweite kritische Drehzahl der elektrischen Maschine zu erhöhen, wird der Erregerrotor steif an die Welle angekoppelt. Zu diesem Zweck ist der Bereich der Welle zwischen dem Rotorkörper und dem Erregerrotor wenigstens zum Teil versteift ausgeführt.

Damit die Differenz zwischen der ersten kritischen Drehzahl der Maschine und ihrer zweiten kritischen Drehzahl möglichst groß wird, ist es nötig, die erste kritische Drehzahl möglichst niedrig zu halten. Zu diesem Zweck wird die Welle wenigstens in einem Teilbereich des Bereiches zwischen dem Rotorkörper und dem Erregerrotor wesentlich biegesteifer ausgeführt als in dem Bereich zwischen dem Rotorkörper und dem dem Erregerrotor abgewandten Lager der Welle. Dadurch wird die erste biegekritische Drehzahl der Maschine, die, wie oben erwähnt, hauptsächlich durch den Rotorkörper und die Welle bestimmt ist, so niedrig wie möglich gehalten.

Durch die Gestaltung gemäß der beschriebenen Ausführungsform ist es bei Synchronmaschinen, die außer einem Hauptrotor (=Rotorkörper) einen Erregerrotor aufweisen, möglich, den Drehzahlbereich zwischen der ersten und der zweiten biegekritischen Drehzahl der elektrischen Maschine besonders groß zu gestalten. Dadurch wird der mögliche Drehzahlregelbereich der Maschine groß.

Eine Weiterbildung der Erfindung sieht vor, daß die in einem Bereich der Welle erhöhte Biegesteifigkeit durch eine Vergrößerung des Wellendurchmessers in diesem Bereich realisiert ist.

Da die Wellen für große hochtourige elektrischen Maschinen üblicherweise aus einem einzigen metallischen Material in einem Stück geschmiedet werden, besteht die wirtschaftlichste und fertigungstechnisch einfachste Möglichkeit der Erhöhung der Biegesteifigkeit darin, die Wellen in den zu versteifenden Bereichen mit einem größeren Durchmesser zu versehen als in den übrigen Bereichen.

Es ist auch denkbar, die Welle in Teilbereichen außen mit versteifenden Längsrippen zu versehen, oder die Welle in Teilbereichen hohl und in anderen Teilbereichen voll oder wenigstens dickwandiger auszuführen.

Eine weitere vorteilhafte Ausgestaltung der Erfindung sieht vor, daß das erste Lager wesentlich weicher abgestützt ist, als das zweite Lager.

Zu diesem Zweck kann das erste Lager beispielsweise über weiche Federelemente wie Stahlfedern oder Gummischubfedern abgestützt sein.

Durch die beschriebene unsymmetrische Gestaltung der Lagerung gelingt es als Unterstützung der im Hauptanspruch aufgeführten Maßnahmen, die erste biegekritische Drehzahl der Maschine abzusenken, während die zweite kritische Drehzahl sich nur unwesentlich ändert.

Oft wird es ausreichen, die im Hauptanspruch genannten Maßnahmen zu treffen, da in diesem Fall alle Lager der Welle gleich ausgeführt werden können, was den Vorteil hat, daß die Wartung und Ersatzteilhaltung für die Lagerung sich vereinfacht. Unter besonderen Umständen kann es aber dennoch notwendig sein, den Vorteil einer symmetrischen Lagerung aufzugeben und durch die unsymmetrische Lagerung die Differenz zwischen der ersten und der zweiten biegekritischen Drehzahl der Maschine noch weiter zu vergrößern.

Im folgenden wird die Erfindung anhand eines Ausführungsbeispiels in den Figuren 1 bis 4 der Zeichnung schematisch gezeigt und nachfolgend beschrieben. Die Erfindung beschränkt sich dabei nicht auf die dargestellten Ausführungsformen.

Dabei zeigt:
- Figur 1:: Einen Rotor mit symmetrischer Welle und mit zusätzlich gelagertem Erregerrotor,
- Figur 2:: einen Rotor mit unsymmetrischer Welle und mit fliegendem Erregerrotor,
- Figur 3:: ein Diagramm, das das Resonanzverhalten eines Rotors mit symmetrischer Welle darstellt,
- Figur 4:: ein Diagramm, das das Resonanzverhalten eines Rotors mit unsymmetrischer Welle darstellt.

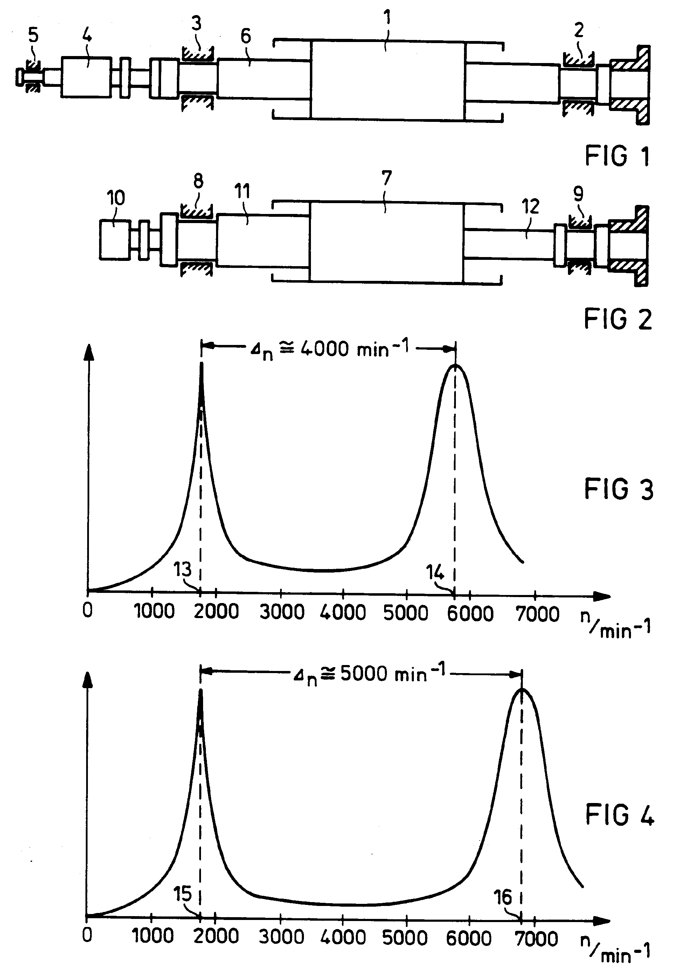

Figur 1 zeigt eine schon aus dem Stand der Technik bekannte elektrische Maschine mit einem Rotorkörper 1, der auf der Welle 6 angeordnet ist. Die Welle 6 ist in den Lagern 2, 3 gelagert. Jenseits des Lagers 3 ist ein Erregerrotor 4 an die Welle 6 angekoppelt. Die Steifigkeit der Welle 6 ist auf beiden Seiten des Rotorkörpers im wesentlichen gleich.

Figur 2 zeigt eine erfindungsgemäße Maschine mit dem Rotorkörper 7, der den Hauptrotor bildet und der auf der Welle 11, 12 angeordnet ist. Die Welle ist zu beiden Seiten des Rotorkörpers 7 in den Lagern 8, 9 gelagert. Jenseits des Lagers 8 schließt sich ein Erregerrotor 10 an, der fliegend gelagert ist. Die Welle weist zwei Abschnitte 11, 12 auf, wobei der Abschnitt 11, der zwischen dem Rotorkörper 7 und dem Lager 8 liegt, einen wesentlich größeren Durchmesser aufweist als der Abschnitt 12, der zwischen dem Rotor 7 und dem Lager 9 liegt. Dadurch ergibt sich, daß die Steifigkeit der Welle 11, 12 zwischen dem Lager 8 und dem Rotorkörper 7 wesentlich größer ist als die Steifigkeit zwischen dem Rotorkörper 7 und dem Lager 9. Daraus resultiert, daß die zweite biegekritische Drehzahl der elektrischen Maschine erhöht wird, während die erste kritische Drehzahl so niedrig wie möglich gehalten wird. In dem auf diese Weise möglichst groß gestalteten Bereich zwischen der ersten und der zweiten kritischen Drehzahl liegt der mögliche Drehzahlregelbereich der Maschine.

Figur 3 zeigt ein Diagramm, in dem auf der Abszisse die Drehzahl der Welle aufgetragen ist, während auf der Ordinate die Vergrößerungsfunktion der Rotorschwingung aufgetragen ist. Bei der Drehzahl, die in der Figur mit 13 bezeichnet ist, liegt die erste kritische Drehzahl des Rotors 1 mit symmetrischer Welle (Fig. 1). Das Bezugszeichen 14 bezeichnet die zweite kritische Drehzahl dieses Rotors.

Figur 4 zeigt ein ähnliches Diagramm wie Figur 3 für einen Rotorkörper 7, dessen Welle asymmetrisch aufgebaut ist (Fig. 2). Die erste kritische Drehzahl 15 dieser Konfiguration liegt etwa bei derselben Drehzahl wie bei dem Rotorkörper 1 nach Figur 1 mit symmetrischer Welle. Die zweite kritische Drehzahl 16 dagegen ist bei der asymmetrischen Konfiguration gegenüber der symmetrischen Konfiguration zu höheren Drehzahlen hin verschoben. Dadurch ergibt sich ein größerer möglicher Drehzahlregelbereich für die asymmetrische Konfiguration zwischen der ersten und der zweiten kritischen Drehzahl.

## Patentansprüche

1. Elektrische Maschine, deren Betriebsdrehzahl in einem Drehzahlregelbereich oberhalb der ersten biegekritischen Drehzahl (15) regelbar ist, und deren Rotorkörper (7) auf einer Well (11,12) angeordnet ist, die auf je einer Seite des Rotorkörpers (7) in einem ersten und einem zweiten Lager (9,8) elastisch gelagert ist,
**dadurch gekennzeichnet**, daß
die Welle (11, 12) wenigstens in einem Teilbereich zwischen dem Rotorkörper (7) und dem zweiten Lager (8) wesentlich biegesteifer ausgeführt ist als in dem Bereich zwischen dem Rotorkörper (7) und dem ersten Lager (9).

2. Elektrische Maschine nach Anspruch 1, bei der an ein Ende der Welle eine Erregermaschine mit einem Erregerrotor angekoppelt ist,
**dadurch gekennzeichnet**, daß
die Welle (11,12) wenigstens in einem Teilbereich des Bereiches zwischen dem Rotorkörper (7) und dem Erregerrotor (10) wesentlich biegesteifer ausgeführt ist als in dem Bereich zwischen dem Rotorkörper (7) und dem dem Erregerrotor abgewandten Lager (9) der Welle (11,12).

3. Elektrische Maschine nach einem der Ansprüche 1 oder 2,
**dadurch gekennzeichnet**, daß
die in einem Bereich der Welle (11, 12) erhöhte Biegesteifigkeit durch eine Vergrößerung des Wellendurchmessers in diesem Bereich realisiert ist.

4. Elektrische Maschine nach Anspruch 1 oder einem der folgenden,
**dadurch gekennzeichnet**, daß
das erste Lager (9) wesentlich weicher abgestützt ist als das zweite Lager (8).

## Claims

1. Electrical machine whose operating speed can be controlled within a speed control range above the first critical whirling speed (15), and whose rotor body (7) is arranged on a shaft (11, 12) that is elastically supported on each side of the rotor body (7) in a first and a second bearing (9, 8), characterised in that at least in a partial range, the shaft (11, 12) is made considerably more flexurally stiff between the rotor body (7) and the second bearing (8) than in the area between the rotor body (7) and the first bearing (9).

2. Electrical machine according to Claim 1, in which an exciter machine having an exciter rotor is coupled to one end of the shaft, characterised in that the shaft (11, 12) is made considerably more flexurally stiff, at least in a part of the area between the rotor body (7) and the exciter rotor (10), than in the area between the rotor body (7) and the bearing (9) of the shaft (11, 12) facing away from the exciter rotor.

3. Electrical machine according to one of the Claims 1 or 2, characterised in that the increased flexural stiffness in one area of the shaft (11, 12) is realized by an increase in the shaft diameter in this area.

4. Electrical machine according to Claim 1 or one of the following Claims, characterised in that the support for the first bearing (9) is considerably more compliant than that for the second bearing (8).

## Revendications

1. Machine électrique, dont la vitesse de rotation en fonctionnement est réglable dans une gamme de réglage de la vitesse de rotation au-dessus de la première vitesse de rotation (15), qui est critique du point de vue de la flexion, et dont le corps de rotor (7) est monté sur un arbre (11,12), qui est supporté élastiquement, des deux côtés du corps de rotor (7), par des premier et second paliers (9,8), caractérisée par le fait que l'arbre (11,12) est réalisé, au moins dans une partie située entre le corps de rotor (7) et le second palier (8), de manière à être nettement plus résistant à la flexion que dans la zone située entre le corps de rotor (7) et le premier palier (9).

2. Machine électrique suivant la revendication 1, dans laquelle une machine excitatrice est accouplée à un rotor excitateur, au niveau d'une extrémité de l'arbre, caractérisée par le fait que l'arbre (11,12) est réalisé, au moins dans une partie de la région située entre le corps de rotor (7) et le rotor excitateur (10), de manière à être nettement plus résistante à la flexion que dans la région située entre le corps de rotor (7) et le palier (9) de l'arbre (11,12), situé à l'opposé du rotor excitateur.

3. Machine électrique suivant l'une des revendications 1 ou 2, caractérisée par le fait que la résistance à la flexion, qui est accrue dans la zone de l'arbre (11,12), est obtenue au moyen d'un accroissement du diamètre de l'arbre dans cette zone.

4. Machine électrique suivant la revendication 1 ou l'une des suivantes, caractérisée par le fait que le premier palier (9) est supporté d'une manière nettement plus souple que le second palier (8).
